# EUROPEAN PATENT SPECIFICATION

(11) **EP 4 256 279 B1**
(45) Date of publication and mention of the grant of the patent: **05.08.2026**
(21) Application number: 21840233.7
(22) Date of filing: 30.11.2021
(51) Int. Cl.: G01F 1/66, G01F 15/00

(54) **ULTRASONIC CHANNEL**
ULTRASCHALLKANAL
CANAL À ULTRASONS

(30) Priority: 05.12.2020 US 202063121886 P; 28.09.2021 US 202117487599
(43) Date of publication of application: 11.10.2023
(73) Proprietor: Itron Global SARL, Liberty Lake, WA 99019 (US)
(72) Inventor: JANDAUD, Pierre-Olivier, Liberty Lake, WA 99019 (US); ZBIDI, Soufiane, Liberty Lake, WA 99019 (US); LEFAUCHEUX, Clara, Liberty Lake, WA 99019 (US); MASSON, Jeremy, Liberty Lake, WA 99019 (US); MEYER, Leo, Liberty Lake, WA 99019 (US); ELATTAR, Abdel-Hakim, Liberty Lake, WA 99019 (US)
(74) Representative: Morrall, Jonathan Ian McLachlan
(86) International application number: PCT/US2021/061173
(87) International publication number: WO 2022/119824

(56) References cited:
- EP-A1- 3 677 877
- EP-A2- 1 775 560
- CN-A- 103 983 312
- US-B2- 10 620 025

## Description

### RELATED APPLICATIONS

This patent application is a continuation of and claims priority to U.S. patent application serial no. 17/487,599, titled "Ultrasonic Channel," filed on 28 September 2021, which claims priority to U.S. provisional application serial no. 63/121,886, titled "Ultrasonic Channel," filed on 05 December 2020.

### BACKGROUND

Known metering devices (e.g., a water meter owned by a utility company and located at a customer site) use ultrasonic transducers to measure fluid flowrate and/or fluid quantity. In an example, a signal is sent from an upstream transducer to a downstream transducer, and a time-of-flight (TOF) is recorded. A similar signal is sent by the downstream transducer to the upstream transducer, and the TOF is recorded. The flowrate can then be determined by comparing the two TOF values. However, the accurate measurement of fluid quantity depends in part on characteristics of the fluid flow. In an example, a fluid flow having inconsistent and/or non-laminar characteristics may be more difficult to accurately measure. Unfortunately, it is difficult to create a consistent fluid flow (e.g., water or gas) in a metering device.

EP3677877A1 (machine translation) describes a measuring tube made of ultrasonic-absorbing plastic for an ultrasonic flow meter for determining a quantity of liquid flowing through, with: a first opening in the measuring tube for introducing an ultrasonic signal into the liquid flowing through, and a second opening in the measuring tube for discharging the ultrasonic signal from the liquid flowing through, which are arranged at a distance one behind the other along the measuring tube; a measuring channel within the measuring tube, which extends between the two openings and is traversed by the liquid flowing through; and at least two deflection areas for receiving one deflection mirror in order to forward the ultrasound signal by reflection from the first opening through the measuring channel to the second opening, the measuring channel being vertical in a cross section is rectangular to the flow direction of the liquid flowing through and has a cross-sectional area that increases in the flow direction of the liquid.

The present invention relates to an insert to affect fluid flow in a water meter according to claim 1. The present invention relates also to a metering device according to claim 9 comprising the insert of claim 1.

CN103983312A describes a bullet type flow stabilizer which is provided with a flow stabilizing pipe body, a reflecting mirror frame, a reflecting mirror and a reflecting cavity pipe body. The bullet type flow stabilizer is characterized in that a bullet-shaped flow stabilizing body is arranged on the other face of the reflecting mirror frame, the bottom end of the bullet-shaped flow stabilizing body is an oblique face, the bullet-shaped flow stabilizing body is fixedly connected with the other face of the reflecting mirror frame through the oblique face, so that the backs of bullet heads of the bullet-shaped flow stabilizing body are against the flow stabilizing pipe body respectively, the center line of the bullet-shaped flow stabilizing body and the center line of the flow stabilizing pipe body are matched, vibration of an ultrasonic wave reflecting face caused by water flow impacting is greatly lowered, meanwhile, fluid pulsation magnitude is lowered, fluctuant fluid forms relatively-stable fluid in the flow stabilizing pipe through the bullet-shaped flow stabilizing body, namely a Reynolds number Re is lowered to be close to 2300, at the time, ultrasonic wave energy is transmitted in fluid with a relatively-stable speed mean value and is not interfered by external changing factors, and accordingly fluid flow speed can be measured accurately.

EP1775560A2 describes an ultrasonic flow meter comprising a flow passage, an ultrasound transducer and a flow straightener for removing or diminishing flow disturbances such as swirls. The flow straightener comprises at least a first and a second straightening means being oppositely twisted along a flow direction with a given twisting angle. The measurement accuracy of a flow meter is improved by the presence of the flow straightener.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components. Moreover, the figures are intended to illustrate general concepts, and not to indicate required and/or necessary elements.
FIG. 1 is a rendering of an example metering device, in a partially exploded view to show the pipe segment and the insert contained within the pipe segment.
FIGS. 2A and 2B are renderings of an example cross-sectional view of a water meter, showing the insert portion installed within the section of pipe.
FIG. 3 is a rendering showing an example upper portion of an insert for a section of pipe within which fluid flow is measured.
FIG. 4 is a rendering showing an example lower portion of an insert for a section of pipe within which fluid flow is measured.
FIG. 5 is a rendering showing an example insert having the upper and lower portions assembled.
FIG. 6 is a diagram showing fluid flow through an example insert.
FIG. 7 is a rendering showing an exploded view of an example insert.
FIG. 8 is a rendering showing a flow stabilizer of a top or upper portion of an example insert.
FIG. 9 is a line drawing showing an exploded view of an insert, showing the upper and lower portions and an O-ring.
FIG. 10 is a cross-sectional view of an example insert.

### DETAILED DESCRIPTION

### Overview

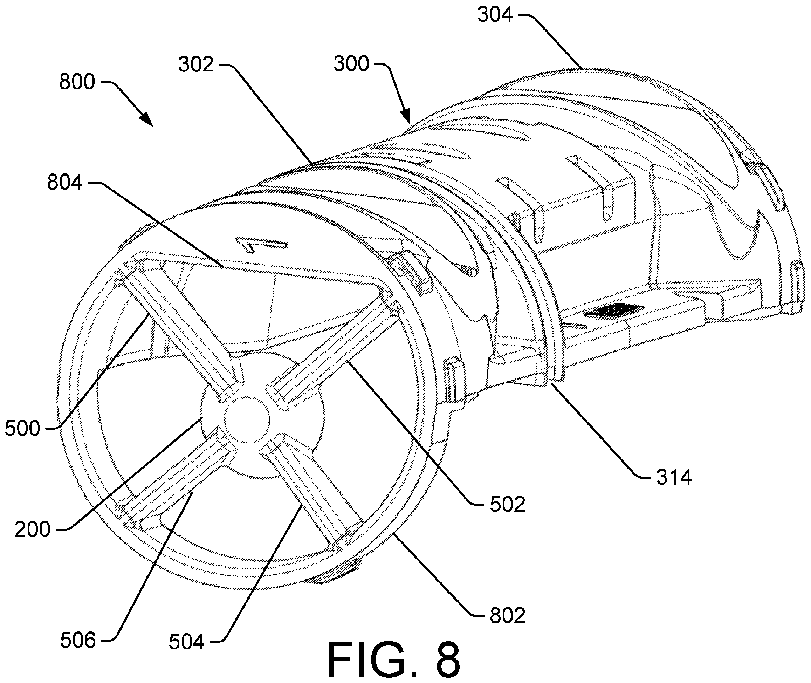

The disclosure describes aspects of fluid (particularly water, but in some examples natural gas) measurement. An example transducer assembly may be configured to send signals between upstream and downstream transducers, and to measure a flowrate as a function of a difference in the upstream and downstream signal time-of- flight. The transducers may be located in a section of pipe. To create better fluid flow characteristics, an insert is installed within the section of pipe. The insert may include one or more features to guide fluid (water, gas, etc.) to create a more laminar, smooth, and/or predictable flow pattern that results in more accurate fluid flowrate and/or quantity measurements. An example feature of the insert may include optimized mirror supports for low pressure drop and stable flow conditions. The mirror supports (upstream and downstream) reflect the ultrasonic (e.g., acoustic) signals sent between the upstream and downstream transducers. The optimized mirror supports have a shape that conducts fluid in a manner that reduces turbulence and promotes more stable and/or laminar flow conditions. Another example feature of the insert is an optimized curve that transitions the insert between areas of greater and lesser diameter. According to the claimed invention the insert comprises a flow stabilizer. In an example, the flow stabilizer may have four fins or blades configured in a "plus sign" shape (e.g., as seen in FIG. 8) that tend to reduce fluid swirl and to promote a reproducible and/or consistent flow. A conic shape at the intersection of the blades smooths and stabilizes the fluid flow.

### Example Metering Devices

For metering devices (e.g., water meters at a customer's site), robustness is an important issue. There are at least two types of robustness. Robustness that results in favorable installations of metering devices despite potentially adverse conditions is a first type of robustness. Such robustness includes systems, techniques and/or components that reduce or eliminate damage of meters in storage, transportation, installation, and/or activation. In a first example, meters are calibrated in ideal conditions. Performance of the meters in "the field" (i.e., installed at a customer location or tested at a customer test bench) must equal, or be nearly equal to the results achieved under ideal conditions. In a second example, pressure drop of the meter should be below a threshold value based on a design or device requirement specification when installed at the customer site.

A second type of robustness involves adherence to high manufacturing standards. Meters manufactured using techniques of mass production should be nearly identical. Variance in manufacturing may result in variances in performance in the field. Accordingly, production of nearly identical meters will promote and result in metrology having good reproducibility and/or accuracy in utility company testing, certification, and/or metering at utility customer sites. In an example of a potential manufacturing problem, meters having a lot of different independent parts may be more difficult to manufacture accurately.

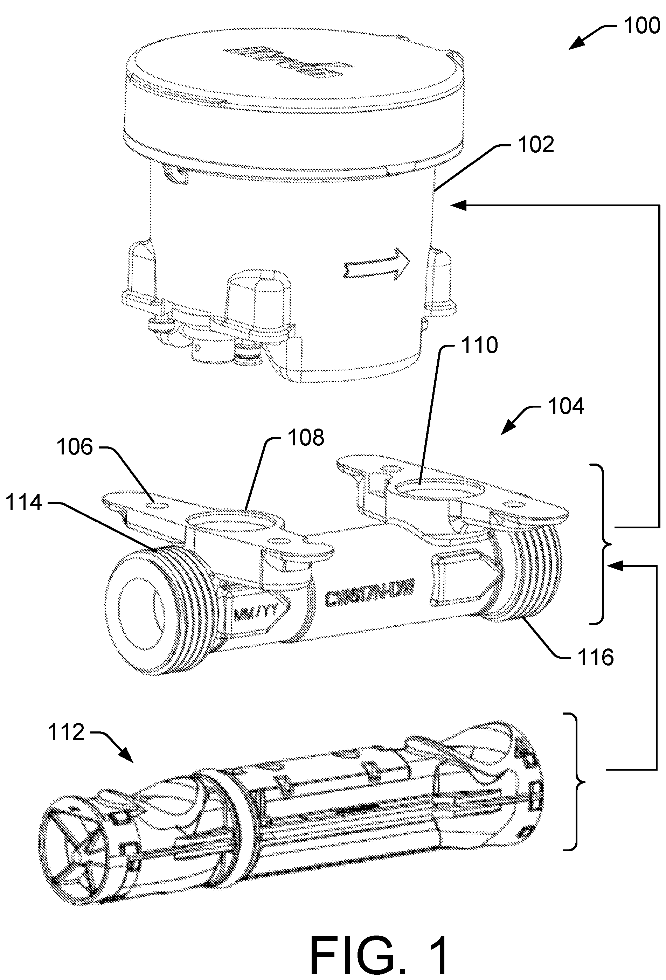

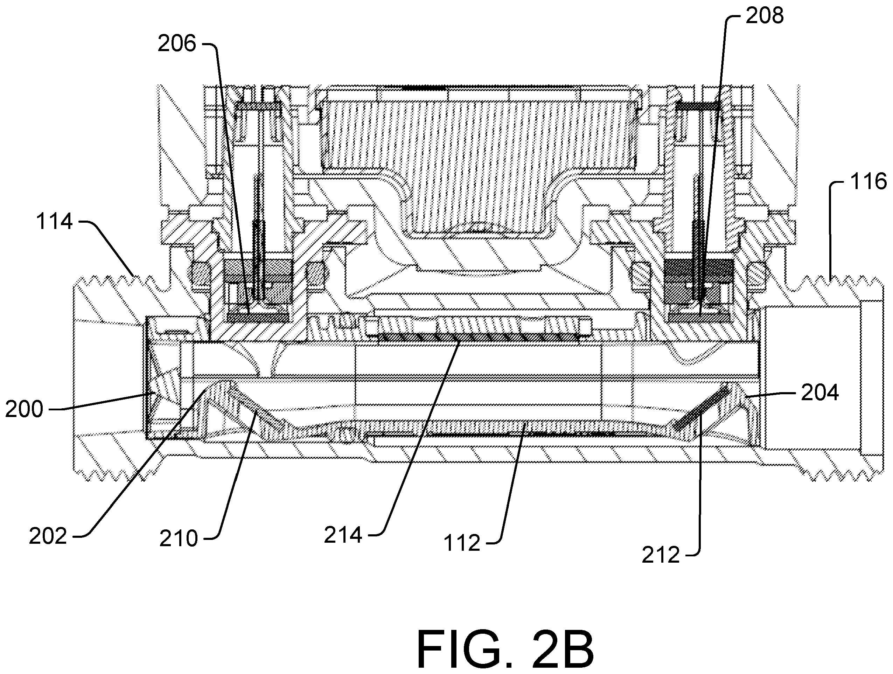

In an example, a high level of metrology robustness, may be achieved using an insert to create an ultrasonic channel within a pipe through which water flows, as it passes through the meter. For metrology robustness against inlet flow conditions, example features include: a W-shaped ultrasonic architecture (described with reference to FIG. 2B) which allows a better integration of the flow. In another example of metrology robustness, optimized shapes may be used in the insert, and made using fluid dynamics simulations. In another example of metrology robustness, a flow stabilizer (e.g., the flow stabilizer 800 of FIG. 8), may be used to remove swirl effects without impacting the overall flow. The flow stabilizer may be molded as part of the insert (e.g., the insert 112 of FIG. 1). At least two significant advantages result from the stabilizer molded as part of the insert. First, a plurality of such inserts with stabilizer will result in a plurality of meters that consistently and accurately measure the same gas flow. In an example, meters configured in series would indicate the same flowrate of gas. Secondly, each insert having a stabilizer has consistent flow characteristics over time. That is, a same flowrate is measured to result in the same measured flowrate.

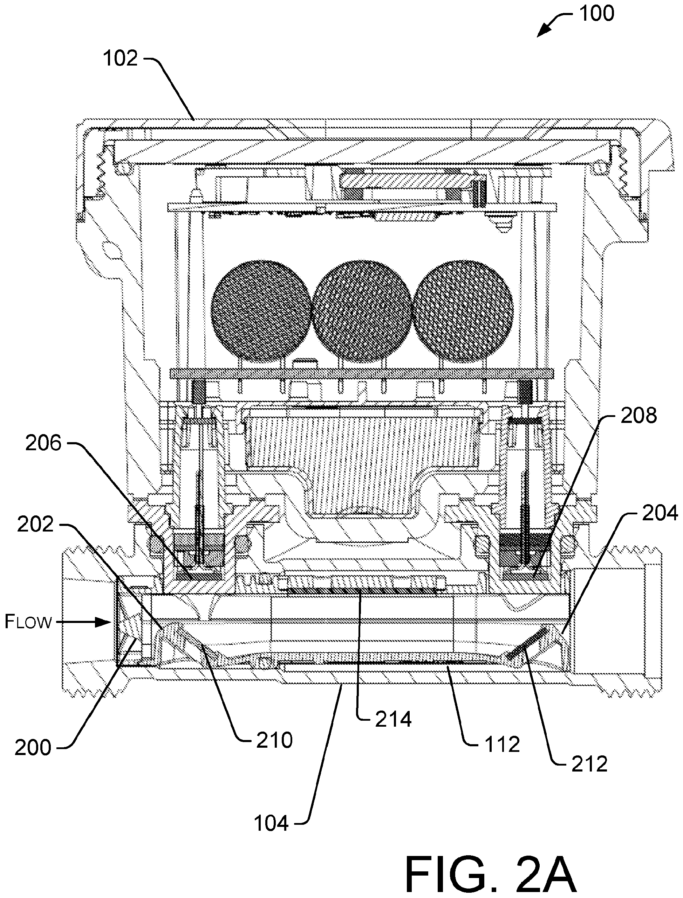

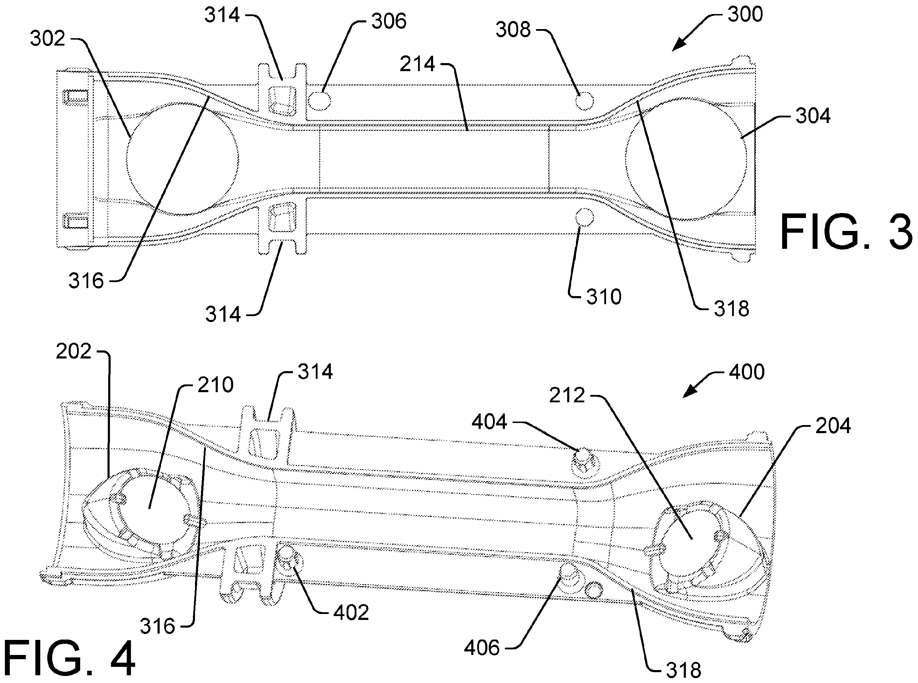

Robustness in mass production, may include additional features. In an example of robustness in mass production, a metrological channel may be made of only two parts (e.g., upper and lower insert). By reducing the parts count, more consistent quality may be achieved in production. In another example of robustness in mass production, a position of the insert is locked by the transducers of the register or metering device. Referring to FIG. 2A, the transducers 206, 208 extend through holes in the insert (e.g., holes 302, 304 of FIG. 3), thereby locking the relative positions of the transducers and the insert 112 (e.g., as seen in FIGS. 2A and 2B). While holes are shown in the example of FIG. 3, the holes may be replaced by or combined with connectors to hold the transducers in precise locations.

In another example of robustness in mass production, a flow stabilizer is directly molded into the upper portion (or alternatively, the lower portion) of the insert. In the example of FIG. 8, the flow stabilizer 800 is molded into the upper portion 300 of the insert 112.

A transducer assembly may be configured to send signals between upstream and downstream transducers, and to measure a flowrate as a function of a difference in the upstream and downstream signal time-of-flight. The transducers may be in contact with fluid flowing through a section of pipe. To create better fluid flow characteristics, an insert is installed within the section of pipe. The insert defines an ultrasonic channel that promotes more desirable and/or laminar fluid flow characteristics and more accurate measurement of fluid flowrate and/or volume. The insert may include one or more features to guide fluid (water, gas, etc.) to create a more laminar and/or smooth and predictable flow pattern that results in more accurate fluid flowrate and/or quantity measurements. An example feature of the insert may include optimized mirror supports for low pressure drop and stable flow conditions. In an example, the mirrors (upstream and downstream) may be manufactured using an overmolding process or other techniques to reduce component count in the insert. The mirrors (upstream and downstream) reflect the ultrasonic signals sent between the upstream and downstream piezo transducers. The optimized mirror supports have a shape that conducts fluid in a manner that reduces turbulence and promotes more stable and/or consistent flow conditions. Another example feature of the insert is an optimized curve that transitions the insert between areas of greater and lesser diameter. A further example feature of the insert is a X-cross shape of the blades of the flow stabilizer (e.g., as seen in FIG. 8), that tends to reduce fluid swirl, and to promote smoother and more consistent flow. A rounded conic shape at the center of the blades deflects flow from one or both mirrors and stabilizes the fluid flow.

### Example Insert for Use with Transducers in a Meter Device

FIG. 1 shows example components of a fluid meter 100 (e.g., a water meter) in a partially exploded view. A register portion 102 is configured to calculate, record and transmit data concerning consumption of fluid (e.g., water) by a customer (e.g., a residential or commercial customer). A section of pipe 104 can be attached to the register portion with one or more fasteners 106. The section of pipe 104 may be connected to incoming and outgoing pipes at threaded connectors 114, 116. Openings 108, 110 allow upstream and downstream transducers to be positioned to send and receive signals through fluid flowing through the pipe. Processing means (e.g., a microprocessor and software in the register portion 102) may be used to measure signal transmission time and determine a fluid flowrate and/or fluid volume passing through the pipe 104.

An insert 112 is sized and configured to be assembled and located within the pipe 104. The insert 112 is further configured to reduce turbulence in fluid flowing between the transducers. Thus, water flows through the insert, which is within the pipe. The insert functions to smooth the water flow, reducing turbulence and making the water flowrate (e.g., fluid volume over time) easier to measure. The insert 112 produces more desirable conditions for the operation of ultrasonic transducers used to measure water flowrate and/or water quantity and/or factors to derive those values.

FIG. 2A shows a fluid meter 100, including the register portion 102, the section of pipe 104 and the insert 112. In the view shown, the section of pipe 104 is connected to the register portion 102. The insert 112 is installed within the section of pipe 104.

The insert 112 includes a conically shaped center portion 200 which smooths fluid flow around the mirrors and/or mirror supports 202, 204. The mirror supports 202, 204 support the mirrors 210, 212 which reflect ultrasonic signals sent between the upstream transducer 206 and downstream transducer 208. A central mirror 214 may also be used. Accordingly, an ultrasonic signal may make a "W" path through the insert. In particular, the signal goes "down" from the upstream transducer 206 to the mirror 210, up-and-over to the central mirror 214, down-and-over to the downstream mirror 212, and then "up" to the downstream transducer 208. The downstream transducer 208 sends a signal to the upstream transducer 206 using the same path but in the reverse direction.

A feature of the insert that results in more accurate manufacturability and more accurate metrology is the connection between the transducers and the insert. The transducers 206, 208 extend through holes in the insert (e.g., holes 302, 304 of FIG. 3), thereby locking the relative positions (e.g., as seen in FIGS. 2A and 2B) of the transducers and the insert 112.

FIG. 2B shows many of the same elements as FIG. 2A, enlarged for convenience.

FIG. 3 shows an example upper portion 300 of an insert (e.g., to be connected to the example lower portion 400 seen in FIG. 4). The upper portion 300 and the lower portion 400, when assembled together and installed in a pipe (e.g., pipe 104 of FIG. 1) are configured to modify fluid flow within the insert to result in increased accuracy of fluid measurement.

FIG. 4 shows an example lower portion 400 of the insert. In the example shown, an upstream mirror support 202 and a downstream mirror support 204 are shaped and configured to promote low pressure drop and stable flow conditions. The mirror support 202 supports an upstream mirror 210 which, in operation, reflects an ultrasonic signal from a first transducer. The signal is again reflected by a central mirror 214 (seen in FIG. 3) of the upper portion 300 of the insert. The signal is reflected a third time by the downstream mirror 212, thereby directing the to a second transducer.

The upper portion 300 and lower portion 400 may be characterized by an interior shape having an optimized upstream curvature 316 and downstream curvature 318, which directs fluid flow in a manner that promotes less turbulent and more laminar flow.

Fasteners 402, 404, 406 (seen in the lower portion 400 of FIG. 4) connect to a complementary number of holes 306, 308, 310 (seen in the upper portion 300 of FIG. 3). Upon assembly, the fasteners hold the upper portion 300 to the lower portion 400, thereby forming the insert 112 (e.g., as seen in FIG. 1) for installation in the section of pipe 104. Optionally, additional alignment features may be used to guide the upper portion 300 and the lower portion 400 into a proper connection.

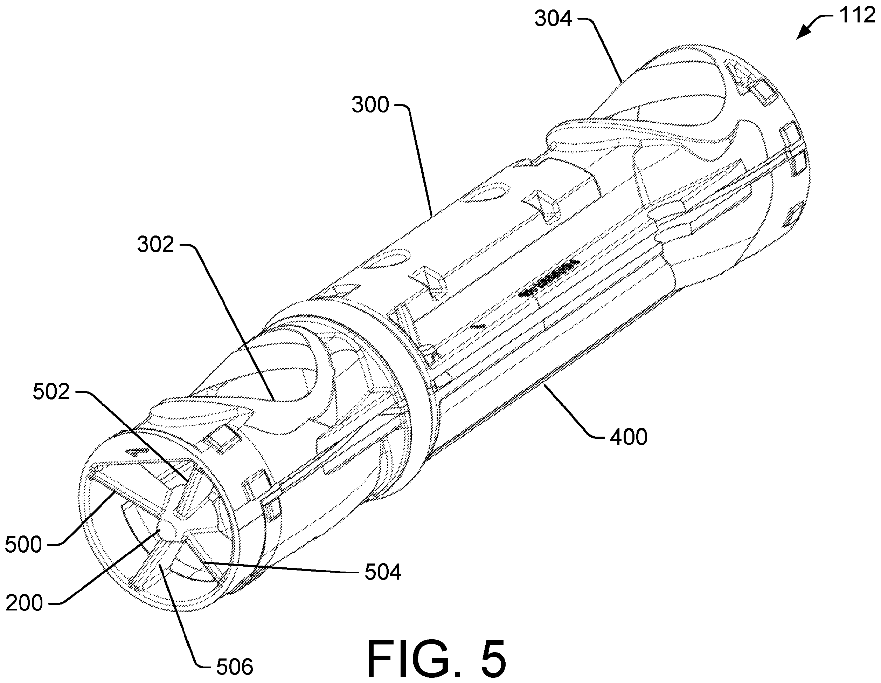

FIG. 5 shows an example insert 112 having the upper portion 300 and lower portion 400 fastened together. Two holes 302 and 304 are defined in the upper portion 300. The holes allow respective upstream and downstream transducers to contact the water or other fluid within the insert. Additionally, the holes 302, 304 may form a type of fastener that separates and secures the upstream transducer 206 and downstream transducer 208 in precise locations, orientations, and distance of separation.

A flow stabilizer (also shown as flow stabilizer 800 in FIG. 8) is configured to smooth the flow of fluid. The conically shaped center portion 200 directs a water flow as it enters the central cavity of the insert. Four blades 500, 502, 504, 506 are connected to, and distributed about, the conically shaped center portion 200 at 90-degree intervals. While four blades are shown in the example of FIG. 5, two to six blades may be used. The number of blades used in any particular insert may be selected based upon comparison of two or more designs having different numbers of blades, and the accuracy and reproducibility of fluid measurement of the different designs. The conically shaped center portion 200 and the blades 500-506 tend to straighten the path taken by fluid, thereby reducing swirl or rotating fluid pathways and promoting repeatable and consistent fluid flow.

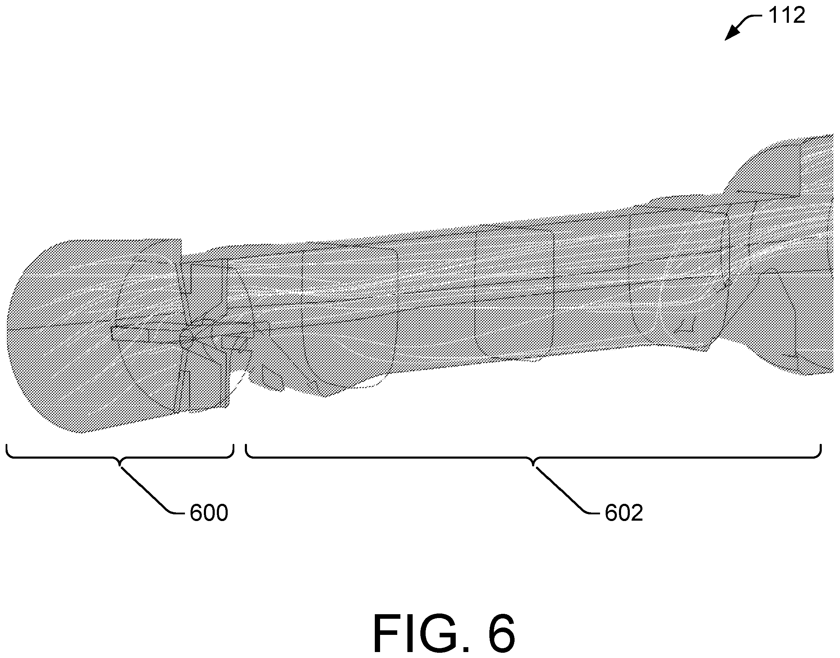

FIG. 6 shows example fluid flow through an example insert 112. In particular, the initial flow 600 is more turbulent, while the flow 602 through the middle portion of the insert 112 less turbulent. Moreover, the flowrate through different inserts 112 is more consistent. The conically shaped center portion 200, the blades 500-506, the curvature 316, 318 of the interior of the insert, and the mirror supports 202, 204 all contribute synergistically to result in a more consistent flow through different instances of the insert 112 (as seen in FIGS. 1, 2, 3 and 5).

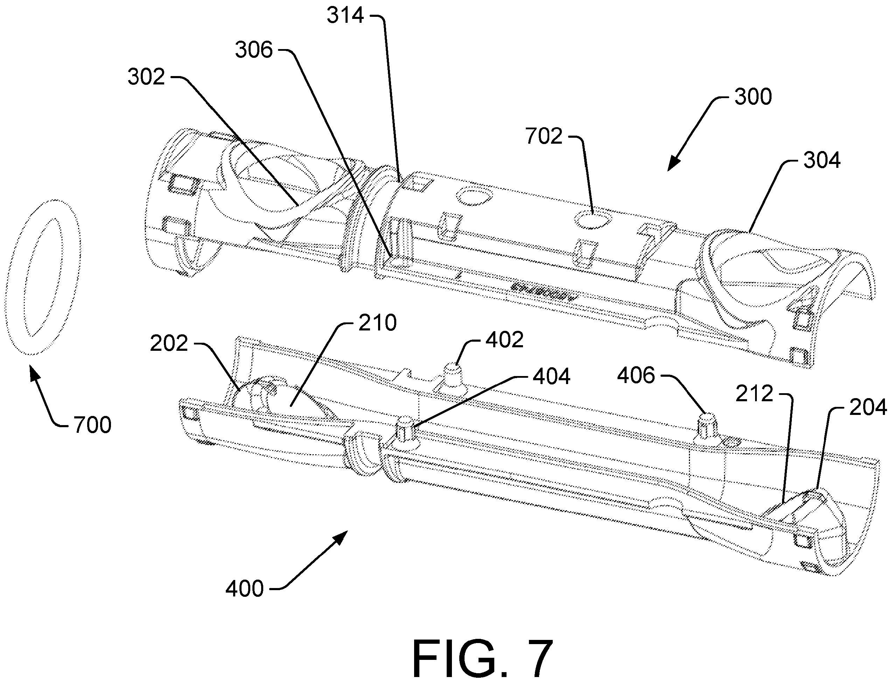

FIG. 7 shows an exploded view of an example insert 112. In the example, the upper portion 300 and lower portion 400 of the insert 112 are shown. The upstream hole 302 and downstream hole 304 provide passages through which the respective upstream and downstream transducers are able to contact water flowing through the insert 112. Referring to the examples of FIGS. 2 and 7, the transducers 206, 208 extend through holes in the insert (e.g., holes 302, 304 of FIG. 3), thereby locking the relative positions of the transducers and the insert 112 (e.g., as seen in FIGS. 2A and 2B). While holes are shown in the examples of FIGS. 3 and 7, each hole may be replaced by, or combined with, a sleeve, a fastener, a connector, and/or a device to hold the transducers in precise locations and in a precise relationship (e.g., a precise separation distance) to each other and to the mirrors 210, 212. In an example, the holes 302, 304 secure the transducers in a fixed position, and are therefore examples of connectors and/or fasteners.

The fasteners 402-406 of the lower portion 400 and associated hole or complementary fastener 306-310 (seen in FIG. 3) of the upper portion 300 allow the upper portion 300 and lower portion 400 to be fastened together. Note that while the fasteners and holes have been shown on respective portions, the fasteners are intended only to represent possible fasteners, and the fasteners could be located on either the upper or lower portion.

An O-ring 700 may be installed on the O-ring channel 314 after the upper and lower portions 300, 400 are fastened together.

The upstream and downstream mirror supports 202, 204 divert water flow direction in a manner that promotes less turbulence and more nearly laminar and more consistent flow. The mirror supports 202, 204 have a curved shape, and are located in portions of the insert 112 having a diameter that is larger than a portion of insert in which the central mirror 214 is located. The mirror supports are associated with respective upstream and downstream mirrors 210, 212. The mirrors reflect ultrasonic signals from the upstream transducer to the downstream transducer, and the reverse. In one example, the mirrors are manufactured using an overmolding technique. Using the overmolding technique, the upstream mirror and the downstream mirror are overmolded to a supporting structure. This technique causes the mirrors to be more accurately located than would be the case where separately constructed mirrors were attached to respective mirror supporting structures.

The central mirror 214 is best seen in FIG. 3; however, the back side of the central mirror 214 can be seen through hole 702.

FIG. 8 shows an example flow stabilizer 800 of an insert. In the example, the flow stabilizer 800 is part of the upper portion 300 of the insert, i.e., the flow stabilizer may be molded directly with, and/or as part of, the upper portion. Alternatively, the flow stabilizer could be part of the lower portion 400 (e.g., seen in FIG. 4) of the insert.

In the example, the flow stabilizer 800 includes the rounded conically shaped center portion 200 and the four blades 500-506. The components of the flow stabilizer 800 work synergistically with the mirror supports and the curved inside wall of the insert 112 to result in substantially less flow-turbulence and smoother and more consistent flow when comparing flow characteristics of a plurality of inserts.

In one example, while the opening in the flow stabilizer 800 is generally circular and defined by a ring 802 of molded material, a flat upper edge 804 may be defined.

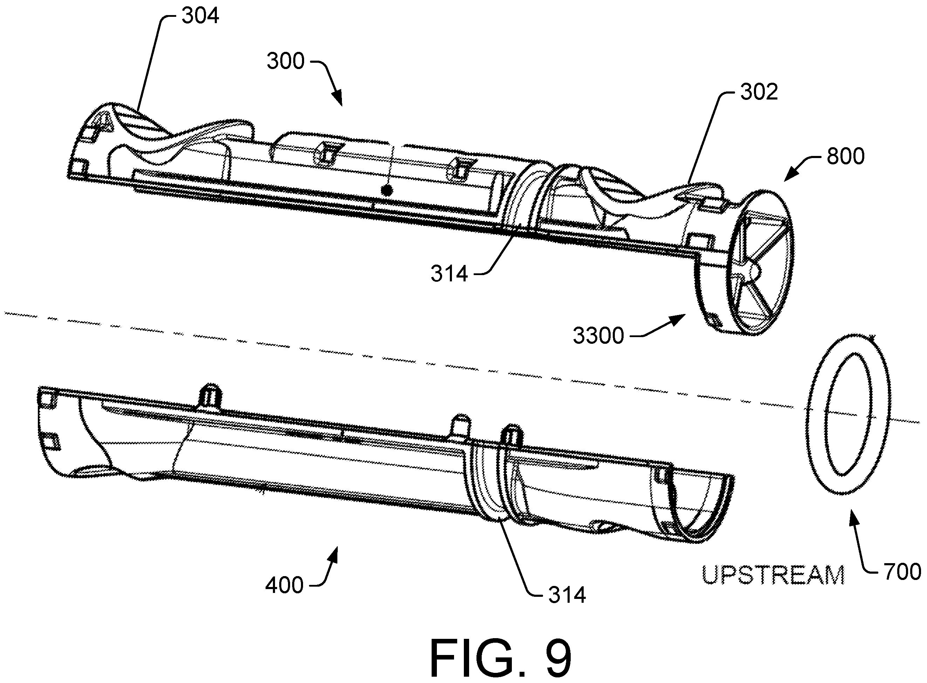

FIG. 9 shows an exploded view of an insert, showing the upper portion 300 and the lower portion 400. Upon assembly, the O-ring 700 is located in the O-ring channel 314. The O-ring acts as an additional fastener to prevent separation of the upper portion 300 and lower portion 400.

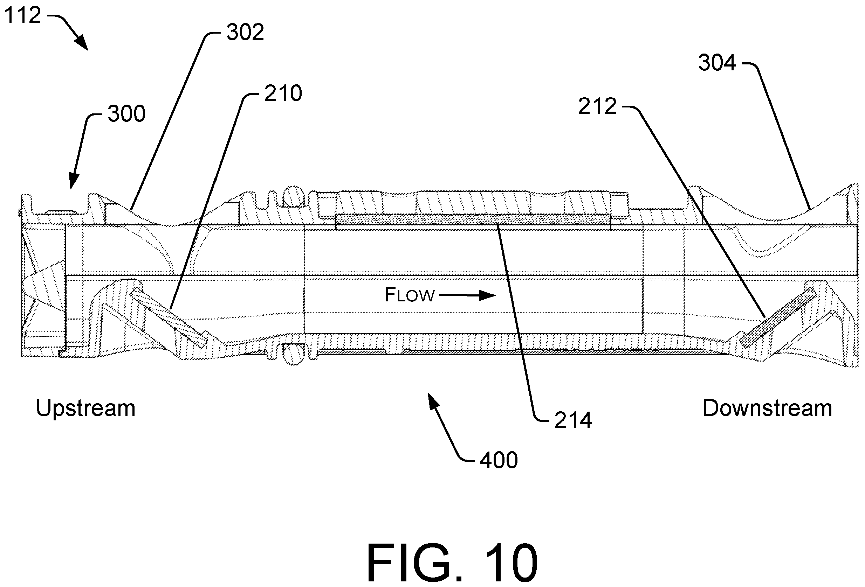

FIG. 10 shows a cross-sectional view of an example insert 112. The flow stabilizer 300 is in an upstream portion of the insert. Upstream and downstream openings 302, 304 provide a passage for respective upstream and downstream transducers. A signal from the upstream transducer would be reflected by the upstream mirror 210, the central mirror 214, and the downstream mirror 212 before being received by the downstream transducer. Note that the upstream transducer 206 and downstream transducer 208 are best seen in FIG. 2A.

### Example Embodiments of Ultrasonic Channels

In an example insert, the insert comprises: an upper insert portion, comprising: a flow stabilizer, the flow stabilizer comprising: a conically-shaped center portion; four blades connected to the conically-shaped center portion; and a central mirror; and a lower insert portion, comprising: an upstream mirror support having an upstream mirror; and a downstream mirror support having a downstream mirror; wherein: an inside wall of the insert is curved; and the upstream mirror support and the downstream mirror support are located in portions of the insert having a diameter that is larger than a portion of insert in which the central mirror located.

In an example of an insert for a water meter, the insert comprises: an upper insert portion having a central mirror; a lower insert portion, comprising: an upstream mirror support having an upstream mirror; and a downstream mirror support having a downstream mirror; a flow stabilizer, attached as part of one of the upper insert portion or the lower insert portion, the flow stabilizer comprising: a conically-shaped center portion; four blades connected to the conically-shaped center portion; and a central mirror; and wherein: an inside wall of the insert is curved; and the upstream mirror support and the downstream mirror support are located in portions of the insert having a diameter that is larger than a portion of insert in which the central mirror located.

## Claims

1. An insert (112) to affect fluid flow in a water meter, comprising:
an upper portion (300) of the insert, comprising:
a central mirror (214);
a lower portion (400) of the insert, comprising:
an upstream mirror (210); and
a downstream mirror (212);
wherein the upper portion (300) and the lower portion (400) are each molded in a single piece; and the upstream mirror (210) and the downstream mirror (212) are overmolded to respective areas of the lower portion (400) of the insert (112);
the insert (112) is further **characterised by**
a flow stabilizer (800) connected to at least one of the upper portion or the lower portion, the flow stabilizer comprising:
a conically-shaped center portion (200); and
at least three blades connected to the conically-shaped center portion (200);
wherein:
the flow stabilizer (800) is molded as part of the upper portion (300); and
the flow stabilizer (800) has four blades (500, 502, 504, 506) connected to the conically-shaped center portion (200).

2. The insert of claim 1, additionally comprising:
an upstream transducer hole (302) defined in the upper portion; and
a downstream transducer hole (304) defined in the upper portion;
wherein the upstream transducer hole and the downstream transducer hole are adjacent to the upstream mirror and the downstream mirror, respectively.

3. The insert of claim 1, additionally comprising:
an upstream transducer fastener defined in the upper portion; and
a downstream transducer fastener defined in the upper portion;
wherein the upstream transducer fastener and the downstream transducer fastener are located and configured to securely position respective first and second transducers a distance apart from one another.

4. The insert of claim 1, additionally comprising:
an O-ring channel (314) defined in both the upper portion and the lower portion; and
an O-ring (700) carried within the O-ring channel.

5. The insert of claim 1, wherein:
the upstream mirror and the downstream mirror are overmolded to an upstream mirror support (202) and a downstream mirror support (204), respectively.

6. The insert of claim 1, additionally comprising:
an upstream mirror support, supporting the upstream mirror; and
a downstream mirror support, supporting the downstream mirror;
wherein the upstream mirror support and the downstream mirror support are located in respective first and second portions of the insert having a greater diameter than a central portion of the insert containing the central mirror.

7. The insert of claim 6, wherein:
the upstream mirror support has a rounded upstream side; and
the downstream mirror support has a rounded downstream side.

8. The insert of claim 1, wherein:
the flow stabilizer is part of the upper portion; and
the flow stabilizer comprises:
a ring of molded material;
a rounded point on the conically-shaped center portion; and
four blades connected to the conically-shaped center portion and the ring of molded material.

9. A metering device, comprising:
an upstream transducer;
a downstream transducer;
a section of pipe configured to conduct a flow of fluid within the metering device; and
an insert according to claim 1, contained within the section of pipe, comprising:
an upstream transducer fastener; and
a downstream transducer fastener; the metering device additionally comprising:
an upstream mirror (210) and a downstream mirror (212), each of which are overmolded to portions within the insert.

10. The metering device of claim 9, wherein the upstream transducer fastener and the downstream transducer fastener are sized to securely position respective first and second transducers a distance apart.

## Patentansprüche

1. Einsatz (112) zum Beeinflussen der Fluidströmung in einem Wasserzähler, umfassend:
einen oberen Abschnitt (300) des Einsatzes, der Folgendes umfasst:
einen mittigen Spiegel (214);
einen unteren Abschnitt (400) des Einsatzes, der Folgendes umfasst:
einen vorgelagerten Spiegel (210) und
einen nachgelagerten Spiegel (212);
wobei der obere Abschnitt (300) und der untere Abschnitt (400) jeweils einstückig geformt sind und der vorgelagerte Spiegel (210) und der nachgelagerte Spiegel (212) auf jeweilige Bereiche des unteren Abschnitts (400) des Einsatzes (112) aufgeformt sind;
wobei der Einsatz (112) ferner **gekennzeichnet ist durch** einen Strömungsstabilisator (800), der mit dem oberen Abschnitt und/oder dem unteren Abschnitt verbunden ist, wobei der Strömungsstabilisator Folgendes umfasst:
einen konisch geformten Mittelabschnitt (200) und
mindestens drei Schaufeln, die mit dem konisch geformten Mittelabschnitt (200) verbunden sind;
wobei:
der Strömungsstabilisator (800) als Teil des oberen Abschnitts (300) geformt ist und
der Strömungsstabilisator (800) vier Schaufeln (500, 502, 504, 506) aufweist, die mit dem konisch geformten Mittelabschnitt (200) verbunden sind.

2. Einsatz nach Anspruch 1, zusätzlich umfassend:
eine vorgelagerte Wandlerbohrung (302), die in dem oberen Abschnitt definiert ist; und
eine nachgelagerte Wandlerbohrung (304), die in dem oberen Abschnitt definiert ist;
wobei die vorgelagerte Wandlerbohrung und die nachgelagerte Wandlerbohrung jeweils an den vorgelagerten Spiegel und den nachgelagerten Spiegel angrenzen.

3. Einsatz nach Anspruch 1, zusätzlich umfassend:
ein vorgelagertes Wandlerbefestigungselement, das in dem oberen Abschnitt definiert ist; und
ein nachgelagertes Wandlerbefestigungselement, das in dem oberen Abschnitt definiert ist;
wobei das vorgelagerte Wandlerbefestigungselement und das nachgelagerte Wandlerbefestigungselement dazu angeordnet und ausgelegt sind, jeweilige erste und zweite Wandler sicher in einem Abstand voneinander zu positionieren.

4. Einsatz nach Anspruch 1, zusätzlich umfassend:
einen O-Ring-Kanal (314), der sowohl im oberen Abschnitt als auch im unteren Abschnitt definiert ist; und
einen O-Ring (700), der innerhalb des O-Ring-Kanals getragen wird.

5. Einsatz nach Anspruch 1, wobei:
der vorgelagerte Spiegel und der nachgelagerte Spiegel auf einen vorgelagerten Spiegelträger (202) bzw. einen nachgelagerten Spiegelträger (204) aufgeformt sind.

6. Einsatz nach Anspruch 1, zusätzlich umfassend:
einen vorgelagerten Spiegelträger, der den vorgelagerten Spiegel trägt; und
einen nachgelagerten Spiegelträger, der den nachgelagerten Spiegel trägt;
wobei der vorgelagerte Spiegelträger und der nachgelagerte Spiegelträger in einem jeweiligen ersten und zweiten Abschnitt des Einsatzes angeordnet sind, die einen größeren Durchmesser als ein mittiger Abschnitt des Einsatzes, der den mittigen Spiegel enthält, aufweisen.

7. Einsatz nach Anspruch 6, wobei:
der vorgelagerte Spiegelträger eine abgerundete vorgelagerte Seite aufweist und
der nachgelagerte Spiegelträger eine abgerundete nachgelagerte Seite aufweist.

8. Einsatz nach Anspruch 1, wobei:
der Strömungsstabilisator Teil des oberen Abschnitts ist und
der Strömungsstabilisator Folgendes umfasst:
einen Ring aus geformtem Material;
eine abgerundete Spitze am konisch geformten Mittelabschnitt und
vier Schaufeln, die mit dem konisch geformten Mittelabschnitt und dem Ring aus geformtem Material verbunden sind.

9. Messvorrichtung, umfassend:
einen vorgelagerten Wandler;
einen nachgelagerten Wandler;
einen Rohrabschnitt, der dazu ausgelegt ist, eine Fluidströmung innerhalb der Messvorrichtung zu leiten; und
einen Einsatz nach Anspruch 1, der innerhalb des Rohrabschnitts enthalten ist und Folgendes umfasst:
ein vorgelagertes Wandlerbefestigungselement und
ein nachgelagertes Wandlerbefestigungselement; wobei die Messvorrichtung zusätzlich Folgendes umfasst:
einen vorgelagerten Spiegel (210) und einen nachgelagerten Spiegel (212), die jeweils auf Abschnitte innerhalb des Einsatzes aufgeformt sind.

10. Messvorrichtung nach Anspruch 9, wobei das vorgelagerte Wandlerbefestigungselement und das nachgelagerte Wandlerbefestigungselement so dimensioniert sind, dass sie jeweilige erste und zweite Wandler sicher in einem Abstand voneinander positionieren.

## Revendications

1. Insert (112) destiné à affecter l'écoulement d'un fluide dans un compteur d'eau, comprenant :
une partie supérieure (300) de l'insert comprenant :
un miroir central (214) ;
une partie inférieure (400) de l'insert comprenant :
un miroir amont (210) ; et
un miroir aval (212),
la partie supérieure (300) et la partie inférieure (400) étant moulées chacune d'une seule pièce, et le miroir amont (210) et le miroir aval (212) étant surmoulés à des zones respectives de la partie inférieure (400) de l'insert (112) ;
l'insert (112) étant en outre **caractérisé par**
un stabilisateur d'écoulement (800) relié à au moins l'une de la partie supérieure ou de la partie inférieure, le stabilisateur d'écoulement comprenant :
une partie centrale de forme conique (200) ; et
au moins trois pales reliées à la partie centrale de forme conique (200) ;
dans lequel :
le stabilisateur d'écoulement (800) est moulé en tant que partie de la partie supérieure (300) ; et
le stabilisateur d'écoulement (800) comporte quatre pales (500, 502, 504, 506) reliées à la partie centrale de forme conique (200).

2. Insert selon la revendication 1, comprenant de plus :
un trou de transducteur amont (302) défini dans la partie supérieure ; et
un trou de transducteur aval (304) défini dans la partie supérieure ;
le trou de transducteur amont et le trou de transducteur aval étant adjacents respectivement au miroir amont et au miroir aval.

3. Insert selon la revendication 1, comprenant de plus :
un élément de fixation de transducteur amont défini dans la partie supérieure ; et
un élément de fixation de transducteur aval défini dans la partie supérieure ;
l'élément de fixation de transducteur amont et l'élément de fixation de transducteur aval étant situés et configurés pour positionner solidement les premier et second transducteurs respectifs à distance l'un de l'autre.

4. Insert selon la revendication 1, comprenant de plus :
un canal torique (314) défini à la fois dans la partie supérieure et dans la partie inférieure ; et
un anneau torique (700) porté dans le canal torique.

5. Insert selon la revendication 1,
le miroir amont et le miroir aval étant surmoulés respectivement sur un support de miroir amont (202) et un support de miroir aval (204).

6. Insert selon la revendication 1, comprenant de plus :
un support de miroir amont, supportant le miroir amont ; et
un support de miroir aval, supportant le miroir aval ;
le support de miroir amont et le support de miroir aval étant situés dans des première et seconde parties respectives de l'insert ayant un diamètre supérieur à une partie centrale de l'insert contenant le miroir central.

7. Insert selon la revendication 6,
le support de miroir amont ayant un côté amont arrondi ; et
le support de miroir aval ayant un côté aval arrondi.

8. Insert selon la revendication 1,
le stabilisateur d'écoulement faisant partie de la partie supérieure ; et
le stabilisateur d'écoulement comprenant :
un anneau en matériau moulé ;
un point arrondi sur la partie centrale de forme conique ; et
quatre pales reliées à la partie centrale de forme conique et à l'anneau en matériau moulé.

9. Dispositif de mesure, comprenant :
un transducteur amont ;
un transducteur aval ;
une section de tuyau configurée pour conduire un écoulement de fluide à l'intérieur du dispositif de mesure ; et
un insert selon la revendication 1, contenu dans la section de tuyau, comprenant :
un élément de fixation de transducteur amont ; et
un élément de fixation de transducteur aval ; le dispositif de mesure comprenant en outre :
un miroir amont (210) et un miroir aval (212), chacun d'eux étant surmoulé sur des parties à l'intérieur de l'insert.

10. Dispositif de mesure selon la revendication 9, l'élément de fixation de transducteur amont et l'élément de fixation de transducteur aval étant dimensionnés pour positionner solidement les premier et second transducteurs respectifs à une distance l'un de l'autre.
